(19) Europäisches Patentamt European Patent Office Office européen des brevets

(11) **EP 4 546 244 A1**

(12) **EUROPEAN PATENT APPLICATION**
published in accordance with Art. 153(4) EPC

(43) Date of publication:
**30.04.2025 Bulletin 2025/18**

(21) Application number: **23830994.2**

(22) Date of filing: **06.06.2023**

(51) International Patent Classification (IPC):
**G06Q 40/02** *(2023.01)*

(52) Cooperative Patent Classification (CPC):
**G06Q 40/02**

(86) International application number:
**PCT/JP2023/020926**

(87) International publication number:
**WO 2024/004544 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.06.2022 JP 2022102892**

(71) Applicant: **Socialgood, Inc.**
**Tokyo, 100-0005 (JP)**

(72) Inventor: **TAKAOKA, Soichiro**
**Tokyo 100-0005 (JP)**

(74) Representative: **Cabinet Beaumont**
**4, Place Robert Schuman**
**B.P. 1529**
**38025 Grenoble Cedex 1 (FR)**

(54) **INFORMATION PROCESSING METHOD, INFORMATION PROCESSING PROGRAM, AND INFORMATION PROCESSING DEVICE**

(57)    An information processing method causing a computer to execute processing of acquiring demand-supply information related to demand or supply for crypto assets on a block chain system; and restricting, based on acquired demand-supply information, a transfer quantity of tokens that can be converted into the crypto assets held by a user.

FIG.12

EP 4 546 244 A1

**Description**

Technical Field

The present invention relates to an information processing method and the like that restricts withdrawals of crypto assets.

Background Art

Crypto assets have increasingly used. Crypto assets have a defined issuance upper limit in order to ensure their scarcity and to prevent the value from falling. The defined issuance limit alone is, however, not enough to stabilize their value, and the circulation quantity in the market also needs to be controlled.

To address such a problem, a trading system has been proposed that revitalizes the cryptocurrency market by appropriately regulating the quantity of cryptocurrency supplied to the market (Patent Literature 1). The transaction system determines whether or not a collection period for a fee for remittances or trading exceeds a predetermined value, and in the case where the collection period of a fee exceeds the predetermined value, at least part of the fee is refunded to the balance information of the virtual currency for each customer.

Citation List

Patent Literature

Patent Literature 1: Japanese Patent Application Laid-Open Publication No. 2017-54339

Summary of Invention

Technical Problems

Refunding fees alone, however, may fail to effectively control the circulation quantity of crypto assets in the market. The present invention is made in view of such a situation. The object is to provide an information processing method and the like that restricts withdrawals of crypto assets.

Solution to Problems

An information processing method according to one embodiment of the present application comprises acquiring demand-supply information related to demand or supply for crypto assets on a block chain system; and restricting, based on acquired demand-supply information, a transfer quantity of tokens that can be converted into the crypto assets held by a user.

Advantageous Effects of Invention

In one aspect of the present application, it is possible to restrict withdrawals of crypto assets.

Brief Description of Drawings

FIG. 1 is an explanatory view depicting a configurational example of a tokenback system.
FIG. 2 is a block diagram depicting a configurational example of the hardware in a server.
FIG. 3 is a block diagram depicting a configurational example of the hardware of a terminal.
FIG. 4 is an explanatory view depicting an example of a user DB.
FIG. 5 is an explanatory view depicting an example of a member shop DB.
FIG. 6 is an explanatory view depicting an example of a purchase history DB.
FIG. 7 is an explanatory view depicting an example of a grant history DB.
FIG. 8 is an explanatory view depicting an example of a withdrawal history DB.
FIG. 9 is an explanatory view depicting an example of a restriction rule DB.
FIG. 10 is an explanatory view depicting an example of a restriction DB.
FIG. 11 is a flowchart depicting an example of the procedure for restriction setting processing.

FIG. 12 is a flowchart depicting an example of the procedure for dashboard display processing.

FIG. 13 is a flowchart depicting an example of the procedure for withdrawal processing.

FIG. 14 is an explanatory view depicting a restriction notification screen.

FIG. 15 is a flowchart depicting an example of the procedure for restriction removal processing.

FIG. 16 is an explanatory view depicting an example of a learning model.

FIG. 17 is a flowchart depicting an example of the procedure for learning processing.

FIG. 18 is a flowchart depicting another example of the procedure for withdrawal processing.

FIG. 19 is an explanatory view depicting another example of a learning model.

FIG. 20 is a flowchart depicting another example of the procedure for restriction setting processing.

FIG. 21 is an explanatory view depicting another example of the learning model.

FIG. 22 is an explanatory view depicting an example of a withdrawal queue.

FIG. 23 is an explanatory view depicting an example of a management queue.

FIG. 24 is a flowchart depicting an example of the procedure for withdrawal application processing.

FIG. 25 is a flowchart depicting another example of the procedure for the withdrawal processing.

Description of Embodiments

The present embodiments will be described below in detail based on the drawings representing the embodiments thereof.

(Embodiment 1)

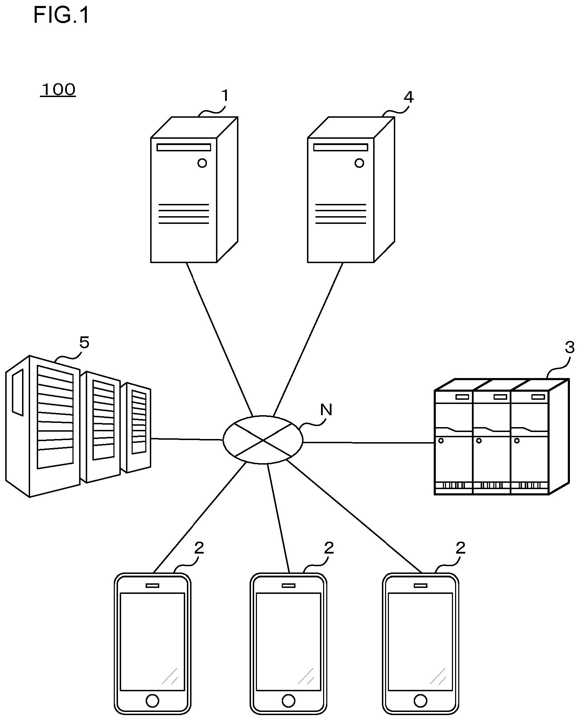

FIG. 1 is an explanatory view depicting a configurational example of a tokenback system. In a tokenback system 100 according to the present embodiment, a token is granted to a user who purchased a commodity or a service (hereinafter, referred to as "commodity or the like") with legal currency at a predetermined member shop. The tokenback system 100 includes an information processing apparatus 1, terminals 2, 2, 2, ..., an exchange server 3, an EC (Electric Commerce) server 4 and an issuing server 5. These devices are connected so as to communicate with one another through a network N such as the Internet or the like.

The information processing apparatus 1, which is composed of a server computer or a personal computer, for example, is capable of performing various kinds of information processing and transmitting and receiving information. In the present embodiment, the information processing apparatus 1 is assumed to be composed of a server computer, and in the following, it will be read as a server 1 for the sake of simplicity. The server 1 is a server computer of a manager who manages the tokenback system 100, and performs cash back in a token (tokenback) to the users who purchased commodities or the like at member shops that are the members of the tokenback system 100. The token here is a token specific to the present system.

There are two types of tokens in the tokenback system 100. The two types of tokens are off-chain tokens and on-chain tokens. The off-chain tokens are only valid within the tokenback system 100. The quantity of off-chain tokens held by the user is stored in the database managed by the system. Off-chain tokens are not in the state where the transaction history is recorded in a block chain system (hereinafter referred to as "block chain"). If selling off-chain tokens to others, the user needs to once transfer the tokens to their wallet. Here, the server 1 receives tokens issued from the exchange and sends them to the wallet of the user. The tokens are on-chain tokens whose transaction history is recorded on a block chain. On-chain tokens are crypto assets (cryptocurrencies or virtual currencies) whose transaction history is recorded on a block chain. Crypto assets can be obtained and converted into cash from operators (crypto asset exchange service provider) called "crypto exchange" or "brokerage." Moreover, crypto assets are property values that can be exchanged on the Internet.

Storing an off-chain token in a wallet as an on-chain token by the user is called withdrawal. The off-chain tokens are based on an agreement between the operator of the tokenback system 100 and the user, and are changed to the on-chain tokens, i.e., the normal crypto assets by the user performing withdrawal to the wallet. The on-chain tokens granted by the server 1 do not have to be specific tokens. For example, on-chain tokens may be existing crypto assets such as Bitcoin (registered trademark), Ethereum (registered trademark), Ripple, NEM or the like.

Off-chain tokens are tokens that are promised to be equivalently exchanged for on-chain tokens. That is, one unit quantity of on-chain tokens can be exchanged for one unit quantity of off-chain tokens. However, though not limited thereto, the on-chain tokens may be exchanged for points of a point service instead of off-chain tokens. Exchange between points and on-chain tokens is not necessarily performed on a one-to-one basis, and after deciding an exchange rate, exchange between points and on-chain tokens may be performed at the decided exchange rate. For example, if the exchange rate is 10 to 1, 10 points can be exchanged for one unit quantity of on-chain tokens. Exchanging an off-chain token or a point for an on-chain token is also referred to as converting an off-chain token or a point into an on-chain token.

The demand-supply information herein will be widely interpreted without being limited to information on supply of crypto assets and information on demand of crypto assets. The demand-supply information is assumed to also include the market price fluctuating due to the supply-demand balance of crypto assets, the issue quantity of crypto assets related to the circulation quantity in the market and the quantity held by users and operators. The information that affects the asset values of crypto assets is here referred to as demand-supply information.

The terminal 2 is a terminal device to be used by each of the users who utilizes the tokenback system 100. The terminal 2 includes, for example, a smartphone, a tablet terminal and a personal computer. In the present embodiment, description will be made on the assumption that the terminal 2 is a smartphone provided with a touch panel. The terminal 2 is preinstalled with an application program for implementing a function according to the tokenback system 100.

The exchange server 3 is a server computer of a cryptocurrency exchange service provider that provides a cryptocurrency exchange. The on-chain tokens according to the present embodiment are listed on one or more exchanges, and the users can sell or buy on-chain tokens at the exchange.

The EC server 4 is a server computer of an EC site (virtual shop) business operator that provides an electronic commerce transaction service. The tokenback system 100 is joined not only by business operators that handle the sale of commodities or the like at real shops but also by EC site business operators. Each user can receive an off-chain token when purchasing a commodity or the like at a real shop or an EC site, which is a member shop.

The issuing server 5 is a server computer that issues on-chain tokens according to the tokenback system 100 and controls the issuance upper limit of on-chain tokens. In the present system, the issuing server 5 issues on-chain tokens and supplies them to a trading market (exchange or the like). The issuance upper limit of on-chain tokens is defined by the issuing server 5, and the issuing server 5 regulates the issue quantity with reference to the demand-supply situation of the on-chain tokens on the market.

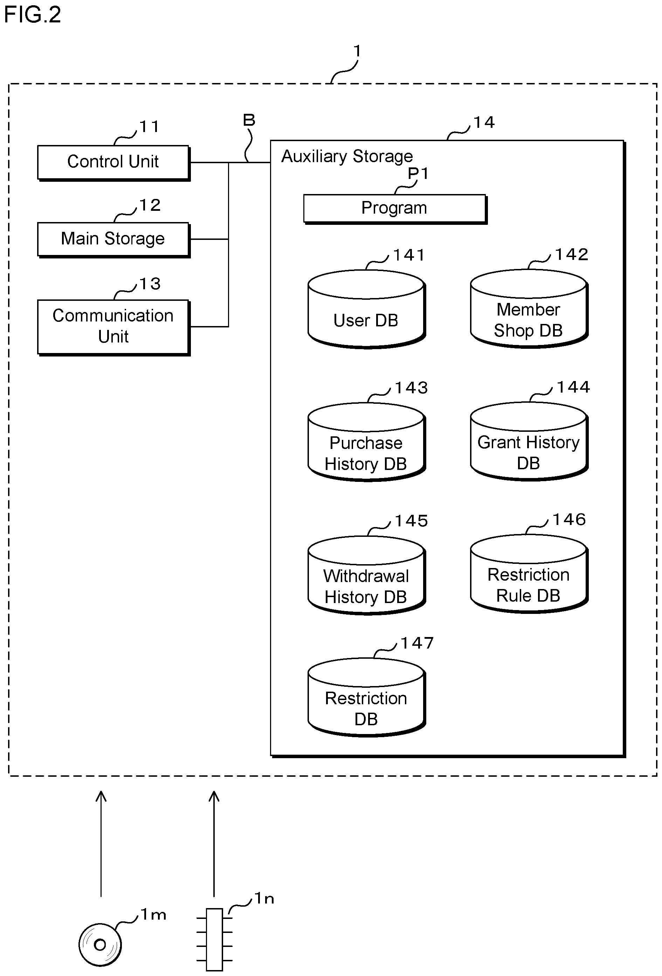

FIG. 2 is a block diagram depicting a configurational example of the hardware in the server. The server 1 includes a control unit 11, a main storage 12, a communication unit 13 and an auxiliary storage 14. The control unit 11, the main storage 12, the communication unit 13 and the auxiliary storage 14 are connected by a bus B.

The control unit 11 includes one or more arithmetic processing units such as a CPU (Central Processing Unit), an MPU (Micro-Processing Unit), a GPU (Graphics Processing Unit) and the like. The control unit 11 performs various kinds of information processing, control processing and the like related to the server 1 by reading a program P1 (program product) stored in the auxiliary storage 14 and executing the program. The control unit 11 further executes the program P1 to realize functional parts such as an acquisition unit, a restriction unit and the like.

The main storage 12 is an SRAM (Static Random Access Memory), a DRAM (Dynamic Random Access Memory), a flash memory and the like. The main storage 12 temporarily stores data necessary for the control unit 11 to execute arithmetic processing.

The communication unit 13, which includes a processing circuit and the like for performing processing related to communication, transmits and receives information to/from the terminal 2 or the like.

The auxiliary storage 14 is a large-capacity memory, solid-state drives (SSDs), hard disks or the like. The auxiliary storage 14 stores the program P1 necessary for the control unit 11 to execute processing and other data. Moreover, the auxiliary storage 14 stores a user DB 141, a member shop DB 142, a purchase history DB 143, a grant history DB 144, a withdrawal history DB 145, a restriction rule DB 146 and a restriction DB 147. The auxiliary storage 14 may be an external storage device connected to the server 1. The databases stored in the auxiliary storage 14 may be stored in a cloud storage.

The server 1 may be composed of a multicomputer formed of a plurality of computers, a virtual machine virtually constructed by software, or a quantum computer. Furthermore, the functions of the server 1 may be realized with cloud services.

Furthermore, the server 1 may be provided with a reading unit (not illustrated) that reads a portable storage medium 1m such as a CD (Compact Disk)-ROM or a DVD (Digital Versatile Disc)-ROM, and may be configured to read the program P1 from the portable storage medium 1m and execute it. Alternatively, the server 1 may read the program P1 from a semiconductor memory 1n. Moreover, in addition to the above-mentioned components, the server 1 may include, for example, an input unit that accepts an operation input and a display unit that displays an image.

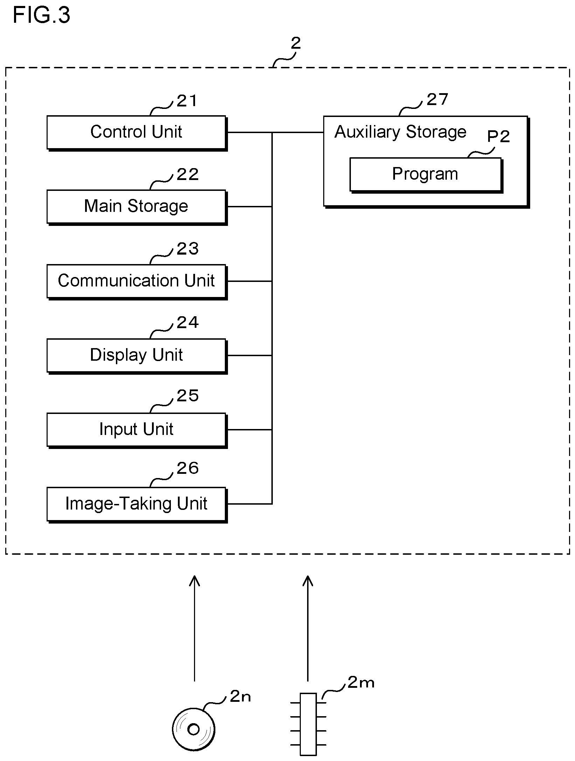

FIG. 3 is a block diagram depicting a configurational example of the hardware of the terminal. The terminal 2 includes a control unit 21, a main storage 22, a communication unit 23, a display unit 24, an input unit 25, an image-taking unit 26 and an auxiliary storage 27.

The control unit 21 includes one or more arithmetic processing units such as a CPU, an MPU or the like. By reading a program P2 (program product) stored in the auxiliary storage 27 and executing the program, the control unit 21 performs various kinds of information processing, control processing and the like related to the terminal 2.

The main storage 22 is an SRAM, a DRAM, a flash memory or the like. The main storage 22 temporarily stores data necessary for the control unit 21 to execute arithmetic processing.

The communication unit 23 includes an antenna, a processing circuit and the like for performing communication. The communication unit 23 transmits and receives information to/from the server 1 or the like.

The display unit 24 includes a display panel such as a liquid crystal display, an organic EL (Electro Luminescence) display or the like. The display unit 24 displays an image provided from the control unit 21.

The input unit 25 is an input interface such as a touch panel, a mechanical key or the like. The input unit 25 accepts an operation input from the user.

The image taking unit 26 is a camera provided with an image pickup device such as a CMOS (Complementary Metal Oxide Semiconductor) sensor or the like. The image taking unit 26 takes an image according to an operation input by the user.

The auxiliary storage 27 is a large-capacity memory, an SSD and a hard disk or the like, and stores the program P2 necessary for the control unit 21 to execute processing as well as other data.

The terminal 2, which is provided with a reading unit (not illustrated) for reading a portable storage medium 2n, may read the program P2 from the portable storage medium 2n and execute the program. Moreover, the terminal 2 may read the program P2 from a semiconductor memory 2m.

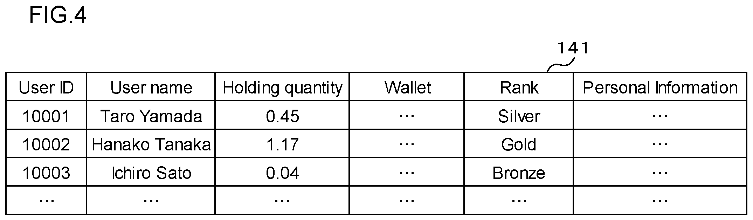

FIG. 4 is an explanatory view depicting an example of a user DB. The user DB 141 stores information on users. The user DB 141 includes a user ID column, a user name column, a holding quantity column, a wallet column, a rank column and a personal information column. The user ID column stores user IDs to identify users. The user name column stores names of users. The holding quantity column stores the quantity of on-chain tokens held by the users. The wallet column stores wallet information (e. g., public key or the like) necessary to transfer on-chain tokens to the users. The rank column stores the ranks of the users. The rank is determined by the purchase history for the member shop, the holding quantity and the holding period of tokens, the grant history (acquisition history) and the like. Depending on the rank, the withdrawal restriction for tokens may be eased. The rank includes diamond, platinum, gold, silver and bronze from the top, for example. The personal information column stores personal information of the users (gender, age, nationality, or the like).

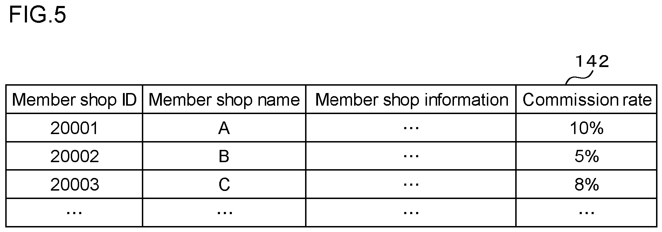

FIG. 5 is an explanatory view depicting an example of a member shop DB. The member shop DB 142 stores information on member shops. The member shop DB 142 contains a member shop ID column, a member shop name column, a member shop information column and a commission rate column. The member shop ID column stores member shop IDs to identify member shops. The member shop name column stores names of member shops. The member shop information column stores other information on the member shops except for the names. The commission rate column stores the percentages of the commissions collected from the member shops.

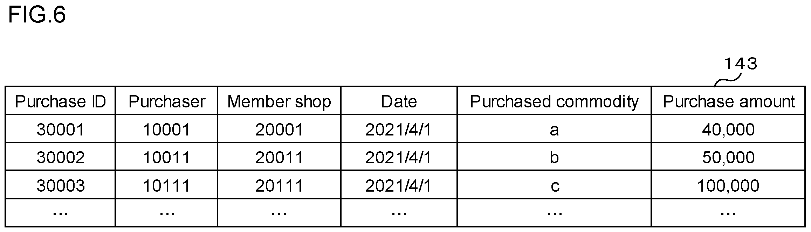

FIG. 6 is an explanatory view depicting an example of a purchase history DB. The purchase history DB 143 stores a purchase history of the user purchasing a commodity or service from the member shops. The purchase history DB 143 contains a purchase ID column, a purchaser column, a member shop column, a date column, a purchased commodity column and a purchase amount column. The purchase ID column stores purchase IDs assigned to individual purchase histories when users purchased commodities or the like from member shops. The purchaser column stores user IDs of the users as purchasers. The member shop column stores member shop IDs of member shops where the users purchased commodities or the like. The date column stores the dates when the users purchased the commodities or the like. The purchased commodity column stores the names of the commodities purchased by the users. The purchase amount column stores the purchase amounts of the commodities or the like.

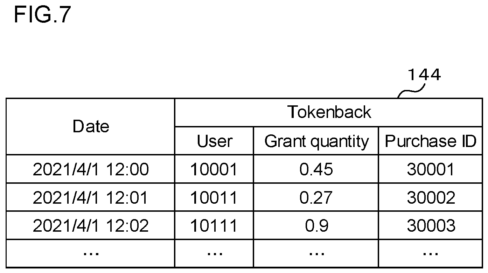

FIG. 7 is an explanatory view depicting an example of a grant history DB. The grant history DB 144 stores the history (grant history) of granting tokens to the user. The grant history DB 144 contains a date column and a tokenback column. The date column stores the dates when tokens were granted to users. The tokenback column stores information on tokenback to the users. The tokenback column further includes a user column, a grant quantity column and a purchase ID column. The user column stores user IDs of the users targeted to be grated tokens. The grant quantity column stores the quantity of tokens granted to the users. The purchase ID column stores the purchase IDs that specify the purchase histories of commodities or the like that triggered token grant. As described above, the users may be granted points instead of off-chain tokens.

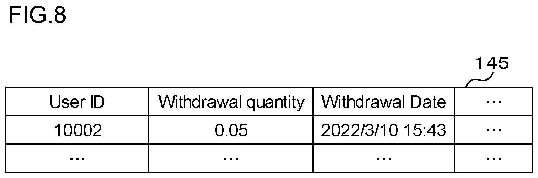

FIG. 8 is an explanatory view depicting an example of a withdrawal history DB. The withdrawal history DB 145 stores the history of the user withdrawing tokens (withdrawal history, transfer history). The withdrawal history DB 145 contains a user ID column, a withdrawal quantity column and a withdrawal date column. The user ID column stores user IDs of users who withdrew tokens. The withdrawal quantity column stores the quantity of withdrawn tokens (the quantity of withdrawal and transfer). The withdrawal date column stores the date and time when withdrawals were performed.

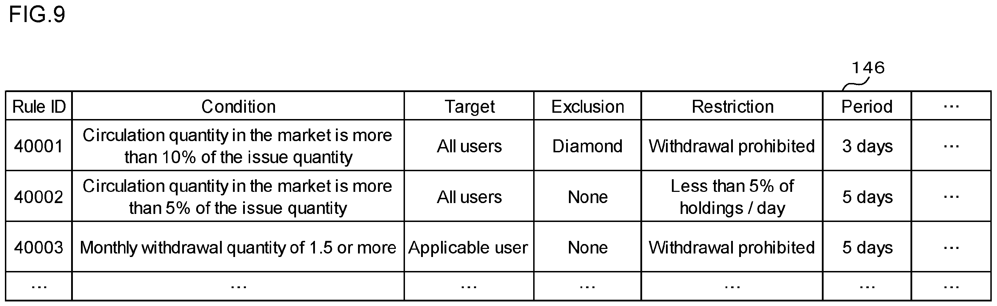

FIG. 9 is an explanatory view depicting an example of a restriction rule DB. The restriction rule DB 146 stores a condition that a withdrawal restriction is imposed and the details of the restrictions. The restriction rule DB 146 contains a rule ID column, a condition column, a target column, an exclusion column, a restriction column and a period column. The rule ID column stores IDs capable of uniquely specifying rules. The condition column stores conditions under which restrictions are imposed. The target column stores information that specifies the users as a target to be restricted. The exclusion column stores information on a user who is to be excluded from the target to be restricted. The restriction column stores the details of the restrictions. The period column stores the periods during which restrictions are to be imposed. By setting no value in the period column, a restriction period does not need to be set. The "circulation quantity in the market" and "issue quantity" indicated in FIG. 9 are examples of the demand-supply information.

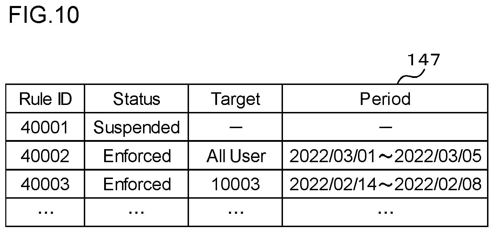

FIG. 10 is an explanatory view depicting an example of a restriction DB. The restriction DB 147 stores the enforcement statuses of restrictions. The restriction DB 147 contains a rule ID column, a status column, a target column and a period column. The rule ID column stores IDs of restriction rules. The status column stores the enforcement statuses of the rules. The enforcement statuses may be being enforced or suspended, for example. The target column stores information on the users who are targets to be restricted. The period column stores periods during which restrictions are imposed. If the rule corresponds to a suspended status, no value (NULL) is set or "-" indicating no setting or a blank is stored, in the target column and the period column.

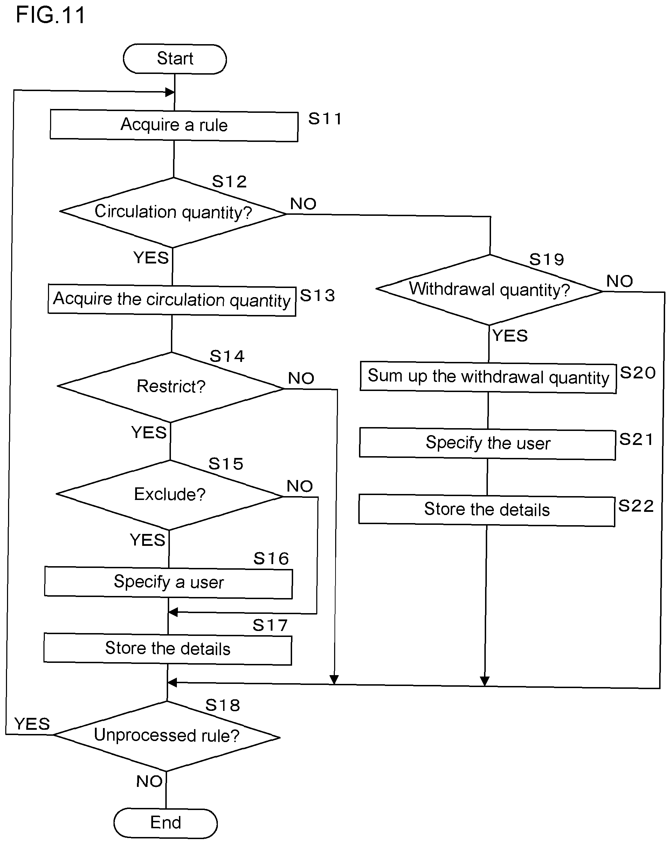

Next, the processing performed in the tokenback system 100 will be described. FIG. 11 is a flowchart depicting an example of the procedure for restriction setting processing. The restriction setting processing is processing repeatedly executed by daily batch processing or the like. The control unit 11 of the server 1 acquires a rule stored in the restriction rule DB 146 (step S11). The control unit 11 determines whether or not the acquired rule is concerned with the quantity of tokens circulated in the market (circulation quantity) (step S12). If determining that the acquired rule is concerned with the circulation quantity (YES at step S12), the control unit 11 makes an inquiry to the exchange server 3 to acquire the circulation quantity (step S13). The control unit 11 compares the acquired circulation quantity with the rule to determine whether or not a restriction is to be performed (step S14). If determining that no restriction is to be performed (NO at step S14), the control unit 11 advances the processing to step S18. If determining that a restriction is to be performed (YES at step S14), the control unit 11 determines whether or not the rule contains an exclusion condition (step S15). If determining that the rule does not contain an exclusion condition (NO at step S15), the control unit 11 advances the processing to step S17. If determining that the rule contains an exclusion condition (YES at step S15), the control unit 11 specifies a user as a target to be restricted (or an exceptional user) (step S16). The control unit 11 generates the details of the restriction and stores the details in the restriction DB 147 (step S17), and shifts the processing to step S18. If determining that the acquired rule is not concerned with the circulation quantity (NO at step S12), the control unit 11 determines whether or not the rule is concerned with a withdrawal quantity (step S19). If determining that the rule is not concerned with the withdrawal quantity (NO at step S19), the control unit 11 advances the processing to step S18 while ignoring the rule. Note that ignoring the rule may be recorded as an error log. If determining that the rule is concerned with a withdrawal quantity (YES at step S19), the control unit 11 sums up the withdrawal quantity for each user with reference to the withdrawal history DB145 (step S20). If the rule contains a period during which summing up is to be made, the control unit 11 sums up the withdrawal quantity during the time period. The control unit 11 compares the subtotals of the withdrawal quantity and the rule to specify the user as a target to be restricted (step S21). The control unit 11 generates the details of the restriction and stores the details in the restriction DB 147 (step S22). The control unit 11 determines whether or not an unprocessed rule is present (step S18). If determining that an unprocessed rule is present (step S18: YES), the control unit 11 returns the processing to step S11 to perform processing as to the unprocessed rule. If determining that no unprocessed rule is present (S18: NO), the control unit 11 ends the processing.

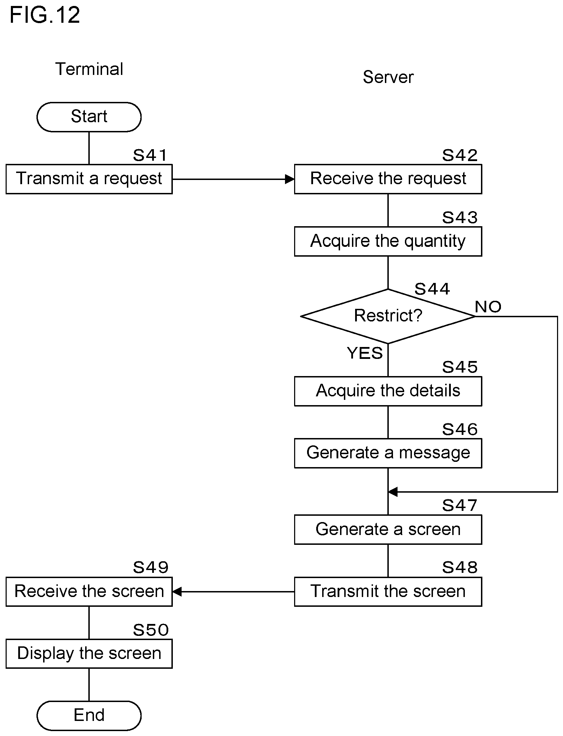

FIG. 12 is a flowchart depicting an example of the procedure for dashboard display processing. The dashboard is a screen for displaying the quantity of tokens or the like held by the user. The user operates the terminal 2 to instruct displaying the dashboard. The control unit 21 of the terminal 2 transmits a request for display of the dashboard to the server 1 (step S41). The control unit 11 of the server 1 receives the request (step S42). The control unit 11 acquires the quantity of tokens held by the user from the user DB 141 (step S43). The control unit 11 determines whether or not a restriction is being enforced referring to the restriction DB 147 (step S44). If determining that no restriction is being enforced (NO at step S44), the control unit 11 advances the processing to step S47. If determining that a restriction is being enforced (YES at step S44), the control unit 11 acquires the details of the restriction rule that are being enforced from the restriction rule DB 146 (step S45). The control unit 11 generates a message indicating the details of the restriction that are being enforced (step S46). The control unit 11 generates a screen to be transmitted to the terminal 2 (step S47). The control unit 11 transmits the screen (step S48). The control unit 21 of the terminal 2 receives the screen (step S49). The control unit 21 displays the screen on the display unit 24 (step S50) and ends the processing.

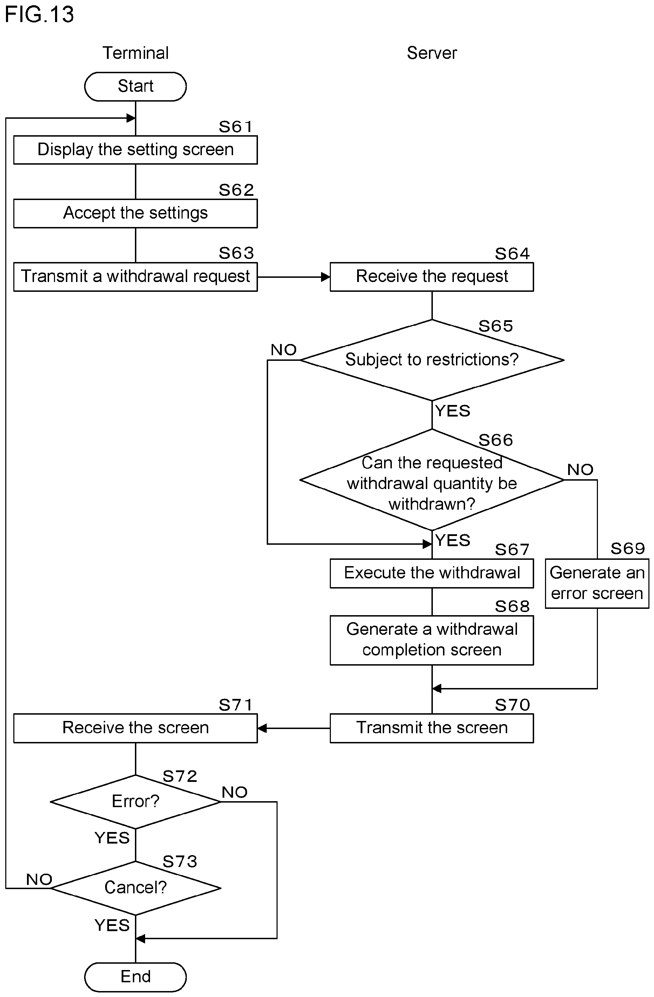

FIG. 13 is a flowchart depicting an example of the procedure for withdrawal processing. The withdrawal processing is processing to be performed in the case where tokens held by the user are paid for a commodity or service, or are exchanged for another crypto asset, for example. The user operates the terminal 2 to select a token withdrawal function. The control unit 21 of the terminal 2 displays a setting screen (step S61). The user sets a withdrawal quantity, a wallet to which a withdrawal is to be performed and the like. The control unit 21 accepts the settings (step S62). The control unit 21 transmits a withdrawal request to the server 1 (step S63). The control unit 11 of the server 1 receives the request (step S64). The control unit 11 determines whether or not a restriction that is targeted at the user is present referring to the restriction DB 147 (step S65). The control unit 11 advances the processing to step S67 if determining that no restriction that is targeted at the user is present (NO at step S65). If determining that a restriction that is targeted at the user is present (YES at step S65), the control unit 11 determines whether or not the requested withdrawal quantity can be withdrawn (step S66). For example, in the case where the upper limit for the withdrawal quantity is set as a restriction, the control unit 11 determines that withdrawal is possible if the requested withdrawal quantity is equal to or less than the upper limit, while the control unit 11 determines that withdrawal is not possible if the requested withdrawal quantity exceeds the upper limit. If determining that withdrawal is possible (YES at step S66), the control unit 11 executes the withdrawal (step S67). The control unit 11 collects the requested quantity of on-chain tokens from the issuing server 5 and stores it in the wallet of the user. The control unit 11 generates a withdrawal completion screen (step S68). If determining that withdrawal is not possible (NO at step S66), the control unit 11 generates an error screen with a message indicating that the withdrawal cannot be performed due to the restriction (step S69). The control unit 11 transmits the generated completion screen or error screen to the terminal 2 (step S70). The control unit 21 of the terminal 2 receives the screen (step S71). The control unit 21 determines whether or not an error has occurred for the withdrawal (step S72). If determining that an error has occurred for the withdrawal (YES at step S72), the control unit 21 determines whether or not the withdrawal is to be canceled (step S73). For example, the error screen is a pop-up screen on which a button to either try the withdrawal again or cancel it is being displayed. If the user selects the cancel button, the control unit 21 determines that the withdrawal is to be canceled. If the user selects the button for retrying the withdrawal, the control unit 21 determines that the withdrawal is not to be canceled. If determining that the withdrawal is not to be canceled (NO at step S73), the control unit 21 returns the processing to step S61. If determining that no error occurs for the withdrawal (NO at step S72), or if determining that the withdrawal is to be canceled (YES at step S73), the control unit 21 ends the processing.

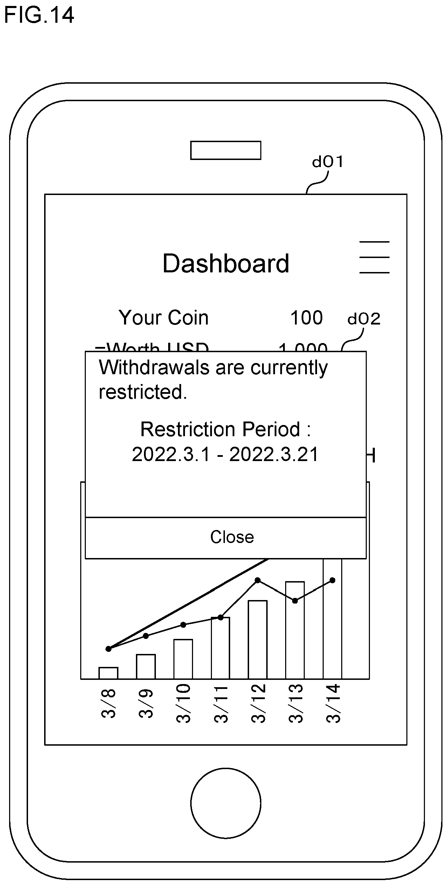

FIG. 14 is an explanatory view depicting a restriction notification screen. FIG. 14 is an example where a restriction notification screen d02 is displayed as a pop-up screen when the dashboard d01, which is a screen for displaying the quantity of tokens or the like held by the user, is displayed. The restriction notification screen d02 displays the details of the restriction and the period of the restriction.

Note that if the application program installed on the terminal 2 can control the wallet that stores on-chain tokens for crypto assets, the quantity of sales may be restricted as in the quantity of withdrawal. Moreover, if points can be exchanged to on-chain tokens for crypto assets, the number of points that can be exchanged is restricted as in the quantity of withdrawal.

The present embodiment produces the following effect. The withdrawal of crypto assets (tokens) can be restricted according to the predefined restriction rules. The user can only sell the crypto assets after withdrawing and storing them in the wallet, which makes it possible to control the circulation quantity in the market of the crypto assets and suppress the value of the crypto assets from falling due to increase in the circulation quantity in the market.

(Restriction Removal Processing)

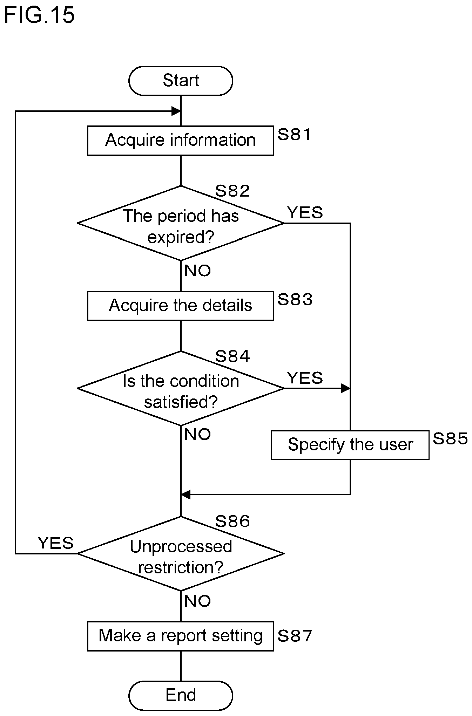

Removal of a withdrawal restriction will be described. FIG. 15 is a flowchart depicting an example of the procedure for restriction removal processing. The restriction removal processing is executed together with the restriction setting processing by the batch processing. The control unit 11 of the server 1 acquires information on the restriction that is being enforced referring to the restriction DB 147 (step S81). The control unit 11 determines whether or not the restriction period has expired (step S82). If the restriction period is not set, the control unit 11 determines that the restriction period has not expired. If determining that the restriction period has expired (YES at step S82), the control unit 11 advances the processing to step S85. If determining that the restriction period has not expired (NO at step S82), the control unit 11 acquires the details of the restriction from the restriction rule DB 146 (step S83). The control unit 11 determines whether or not the condition for removal of the restriction is satisfied (step S84). Assuming that the withdrawal restriction triggered when the circulation quantity in the market reaches 10% or more of the issue quantity is being enforced while the restriction period has not been set, for example. The control unit 11 makes an inquiry to the issuing server 5 to determine whether or not the ratio of the circulation quantity in the market to the issue quantity has improved to less than 10%. If the ratio of the circulation quantity in the market to the issue quantity is less than 10%, the control unit 11 determines that the condition is satisfied. If the ratio of the circulation quantity in the market to the issue quantity still exceeds 10%, the control unit 11 determines that the condition is not satisfied. If determining that the condition for removal of the restriction is not satisfied (NO at step S84), the control unit 11 advances the processing to step S86. If determining that the condition for removal of the restriction is satisfied (YES at step S84), the control unit 11 specifies the user to whom removal of the restriction is to be notified (step S85). The control unit 11 stores the user ID of the specified user in a temporary storage. The temporary storage is provided in the main storage 12 or the auxiliary storage 14. The control unit 11 determines whether an unprocessed restriction is present (step S86). If determining that unprocessed restriction is present (S86: YES), the control unit 11 returns the processing to step S81 to perform the processing for the unprocessed restriction. If determining that no unprocessed restriction is present (step S86: NO), the control unit 11 make a report setting for the removal of the restriction (step S87) and ends the processing. For example, the report setting includes creating a report message and preparing to send the report message by push notification or e-mail. If multiple restrictions are removed, report messages are created for the respective restrictions. For users who are to accept multiple removal reports, a report message that combines the multiple reports together is created. The set report message is sent to the terminal 2 at a predetermined timing. The reason why sending the report message is not set to the time when the restriction removal processing is being executed is that the restriction removal processing is assumed to be executed by the night batch. Sending a report message at night may bother users. If the restriction removal processing is executed during the day, the report message may be sent during execution of the restriction removal processing.

(Embodiment 2)

The present embodiment relates to a mode that determines whether or not a withdrawal restriction is performed using a learning model. In the following descriptions, the contents common to those of Embodiment 1 are not described as much as possible, and the contents that differ from Embodiment 1 are mainly described.

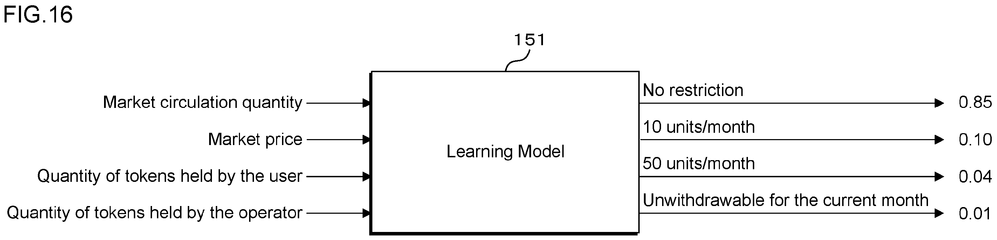

FIG. 16 is an explanatory view depicting an example of a learning model. The learning model 151 takes, as inputs, the quantity of tokens circulated in the market, the market price and the quantity of tokens held by users and operators, and outputs conditions for withdrawal restrictions. The learning model is a neural network such as, for example, CNN (Convolution Neural Network) or the like. The learning model 151 has an input layer, an intermediate layer and an output layer.

The input layer accepts input values such as a circulation quantity in the market and the like. The input layer hands over the accepted input values to the intermediate layer. The intermediate layer, which has multiple neurons, calculates features of the input values from the dimension of the values, the differences between values, the balance of the values and the like, and hands over the features to the output layer. The output layer has multiple nodes corresponding to the types of the restrictions. The output layer includes the SoftMax function to normalize the value so that the sum of the output values of the multiple nodes equals to one. In the example depicted in FIG. 16, the output layer has four nodes. The "no restriction" means that no restriction is imposed on withdrawals. The "10 units/month" refers to the restriction that the upper limit of withdrawals per month is assumed to be 10 unit quantity, e.g., 10 coins. Likewise, the "50 units/month" refers to the restriction that the upper limit of withdrawals per month is 50 unit quantity. The "unwithdrawable for the current month" means that all the withdrawals are restricted until the month changes.

The learning model 151 is not limited to CNN. The learning model 151 may be a model constructed with another learning algorithms such as neural networks other than CNNs, Long Short Term Memory (LSTM), Transformer, Bayesian networks, Decision Trees or the like.

Generation of the learning model 151 is now described. In generating the learning model, training data is prepared. The training data is composed of input values and labels. The input values, here, are the quantity of tokens circulated in the market, the market price, the quantity of tokens held by the user as a target to be determined and the quantity of tokens held by the operators. Each input value is not limited to the value at a certain time point, but may be time-series multiple values. The label is a correct value for the restriction corresponding to an input value. The label here corresponds to "no restrictions," "10 units/month," "50 units/month" or "unwithdrawable for the current month." The training data is stored in the auxiliary storage 14 of the server 1.

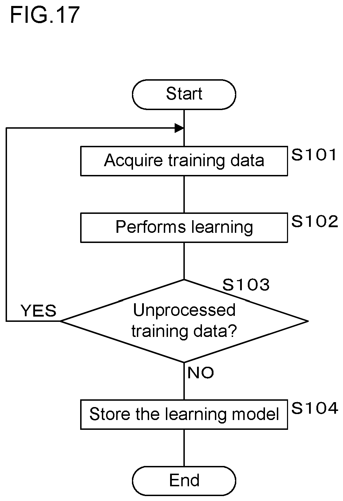

FIG. 17 is a flowchart depicting an example of the procedure for learning processing. The control unit 11 of the server 1 acquires training data (step S101). The control unit 11 performs learning (step S102). The control unit 11 inputs multiple input values constituting training data to the learning model 151. The control unit 11 acquires results output from the output layer through the arithmetic processing in the intermediate layer for the learning model. The control unit 11 compares the output results with the correct values constituting the training data, and optimizes the parameters used for the arithmetic processing in the middle layer so that the output values of the nodes corresponding to the correct values each approach 1. The parameters are, for example, weights (coefficient of coupling) between neurons, coefficients of the activation function used in each of the neurons and the like. Although the method of optimizing parameters is not particularly limited, the control unit 11 optimizes various types of parameters using the error backpropagation method, for example. The control unit 11 determines whether or not unprocessed training data is present (step S103). If determining that unprocessed training data is present (step S103: YES), the control unit 11 returns the processing to step S101 to perform the processing using the unprocessed training data. If determining that no unprocessed training data is present (step S103: NO), the control unit 11 stores the learning model 151 obtained as a learning result (step S104) and ends the processing.

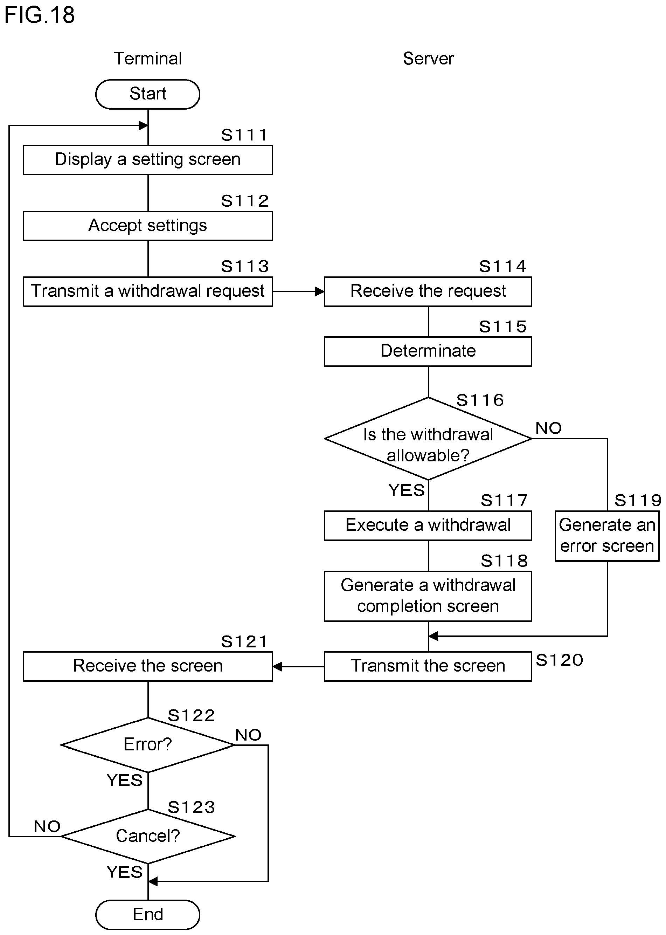

FIG. 18 is a flowchart depicting another example of the procedure for withdrawal processing. The user operates the terminal 2 to select a token withdrawal function. The control unit 21 of the terminal 2 displays a setting screen (step S111). The user sets a withdrawal quantity and a wallet to which withdrawal is to be performed or the like. The control unit 21 accepts settings (step S112). The control unit 21 transmits a withdrawal request to the server 1 (step S113). The control unit 11 of the server 1 receives the request (step S114). The control unit 11 determines a withdrawal restriction using the learning model 151. The control unit 11 acquires the quantity of tokens circulated in the market, the market price and the quantity of tokens held by the operators from the exchange server 3 or the issuing server 5. The control unit 11 acquires the quantity of tokens held by the user from the grant history DB 144 or the like. The control unit 11 inputs the acquired quantity of tokens circulated in the market, market price, quantity of tokens held by the operators and quantity of tokens held by the user to the learning model for determination (step S115). The control unit 11 acquires a determination result output from the learning model 151 and determines whether or not the withdrawal is allowable based on the determination result (step S116). If the determination result indicates "no restriction," the control unit 11 determines the withdrawal to be "allowable."

If the determination result indicates "unwithdrawable for the current month," the control unit 11 determines the withdrawal to be unallowable. If the determination results indicate "10 units/month" and "50 units/month," and the withdrawal quantity designated by the user are equal to or less than 10 units and 50 units, respectively, the control unit 11 determines the withdrawals to be allowable. If the withdrawal quantity designated by the user exceed 10 units or 50 units, the control unit 11 determines the withdrawals to be unallowable. If determining that the withdrawal is allowable (YES at step S116), the control unit 11 executes a withdrawal (step S117). The control unit 11 generates a withdrawal completion screen (step S118). If determining that the withdrawal is unallowable (NO at step S116), the control unit 11 generates an error screen containing a message indicating that the withdrawal cannot be performed due to restrictions (step S119). The message contains the explanation of the details of the restriction. The control unit 11 sends the generated completion screen or error screen to the terminal 2 (step S120). The control unit 21 of the terminal 2 receives the screen (step S121). The control unit 21 determines whether or not an error occurs for the withdrawal (step S122). If determining that an error occurs for the withdrawal (YES at step S122), the control unit 21 determines whether or not the withdrawal is to be canceled (step S123). If determining that the withdrawal is not to be canceled (NO at step S123), the control unit 21 returns the processing to step S111. If determining that an error has not occurred for the withdrawal (NO at step S122), or if determining that the withdrawal is to be canceled (YES at step S123), the control unit 21 ends the processing.

In the present embodiment, by using the learning model 151, determination as to whether or not a withdrawal is restricted or allowed is made possible every time the user intends to withdraw tokens. This eliminates the need for deciding the details of the restriction in advance and makes it possible to impose a restriction on a withdrawal in accordance with the latest trend of tokens.

Note that the input values and determination results for the learning model 151 depicted in FIG. 16 are examples and are not limited thereto. For example, a learning model may be configured such that the quantity of tokens the user wants to withdraw is included in the input values and whether or not the withdrawal is allowable is output as a determination result.

(Embodiment 3)

As in Embodiment 2, the present embodiment is a mode that determines whether or not a withdrawal restriction is performed using a learning model. The present embodiment relates to a mode that determines restrictions targeted at all the users, not an individual user. In the following descriptions, the contents common to the above-mentioned embodiments are not described as much as possible, and the contents that differ from the above-mentioned embodiments are mainly described.

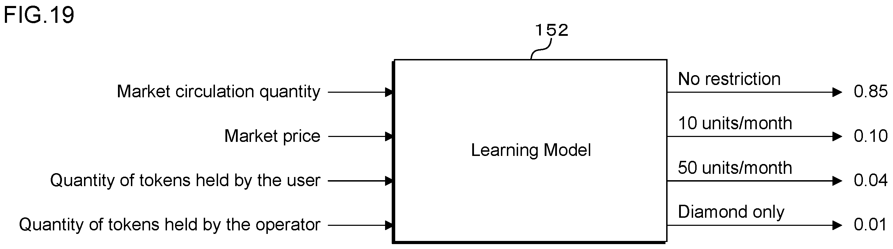

FIG. 19 is an explanatory view depicting another example of a learning model. A learning model 152 takes, as inputs, the quantity of tokens circulated in the market, the market price, the quantity of tokens held by all the users and the quantity of tokens held by the operators, and outputs the conditions for withdrawal restrictions. The learning model 152 is a neural network such as, for example, CNN (Convolution Neural Network) or the like. The learning model has an input layer, an intermediate layer and an output layer.

The difference between the learning model 152 and the learning model 151 is that "user holding quantity," which is one of the inputs, is replaced by "total user holding quantity." The total user holding quantity is the sum of the quantity of tokens held by all the users. In addition, "unwithdrwable for the current month" as one of the outputs is replaced by "diamond only." This means that "unwithdrawable" applies to the other users, while such a restriction does not apply to users of the rank "diamond." The rest of the inputs and outputs are similar to those in FIG. 16. The output layer is the same as that in FIG. 16. The learning model 152 is also similar to the learning model 151 in that each input value may be time-series multiple values, not limited to the value at a certain time point.

The learning processing of the learning model 152 is the same as that of the learning model 151, and thus is not described. The processing using the learning model 152 is different from that using the learning model 151, which will be described below. The learning model 152 is for determining a restriction that can be targeted at all the users, and thus utilized in the restriction setting processing described in Embodiment 1. That is, the restriction setting processing depicted in FIG. 11 is changed as described below.

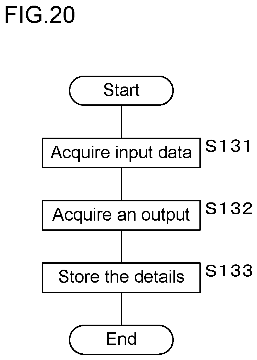

FIG. 20 is a flowchart depicting another example of the procedure for the restriction setting processing. As in the restriction setting processing in Embodiment 1, the restriction setting processing in the present embodiment is also repeatedly executed by daily batch processing or the like. The control unit 11 of the server 1 acquires data to be input to the learning model 152 (step S131). The control unit 11 acquires the quantity of tokens circulated in the market, the market price and the quantity of tokens held by the operators from the exchange server 3 or the issuing server 5. The control unit 11 acquires the quantity of tokens held by the users from the grant history DB 144 and the like to calculate the total quantity of tokens held by all the users. If the time-series data is employed as an input value, data is acquired during a predetermined data acquisition period. The control unit 11 inputs the acquired input data to the learning model 152 and acquires an output from the learning model 152 (step S132). The control unit 11 generates the details of restriction based on the output from the learning model 152, stores the details in the restriction DB 147 (step S133), and ends the processing.

The present embodiment produces the following effect. By the restriction based on the determination with the learning model 152, withdrawals of crypto assets (tokens) are restricted. Since users can only sell crypto assets after they have withdrawn the crypto assets and stored them in their wallets, the quantity of crypto assets circulated in the market can be controlled. This makes it possible to prevent the value of the crypto assets from falling due to the increase of the circulation quantity in the market. In the present embodiment as well, withdrawal processing and restriction removal processing similar to those in Embodiment 1 are performed.

(Embodiment 4)

The present embodiment relates to a mode that employs a learning model generated by deep reinforcement learning. The reinforcement learning is a machine learning algorithm for which an agent placed in a certain environment acts on the environment and evaluates a policy (a rule as a guideline when an agent takes an action) that maximizes an obtainable reward. In reinforcement learning, the agent is like a learner who takes an action on the environment and is a target to be trained. The environment performs updating of the state and granting of a reward for the action taken by the agent. The action is an action that can be taken by the agent in a certain state of the environment. The state is a state of the environment held by the environment. A reward is granted to the agent when the agent acts on the environment with a desired result. The reward may be a positive value, a negative value or zero. For a positive value, the reward corresponds to a reward itself, for a negative value, the reward corresponds to penalty, and for zero, the reward corresponds to no reward. Moreover, an action evaluation function, which is referred to as a Q function, a Q value and an evaluation value in Q learning, is a function that defines evaluation values of actions in certain states and can be represented in tabular form. Q learning is one of the most commonly used method in the reinforcement learning. While Q learning will be described below, another reinforcement learning different from Q learning may alternatively be used.

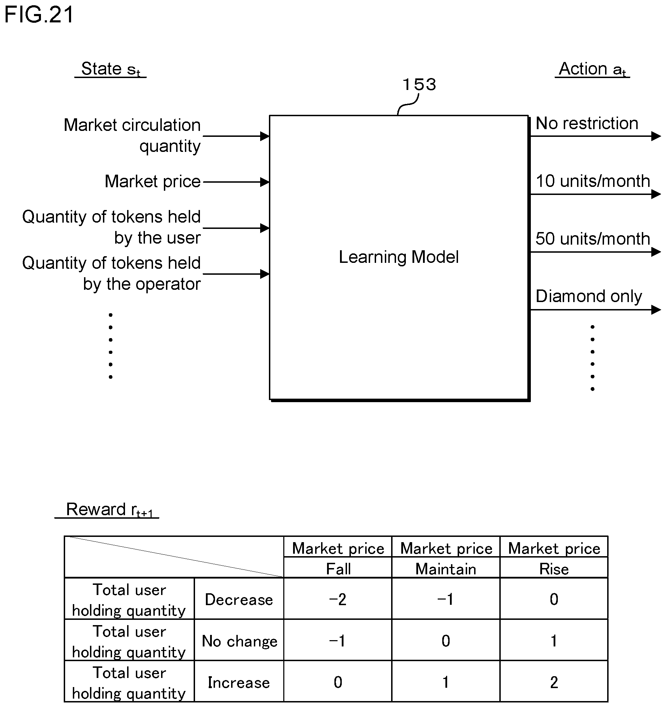

FIG. 21 is an explanatory view depicting another example of the learning model. In the present embodiment, assuming that the circulation quantity in the market, the market price, the total user holding quantity and the operator holding quantity are regarded as "state" (state information), and the details of a withdrawal restriction is regarded as "action" (action information), "reward" (reward information) is calculated based on the fluctuation of the market price and the total user holding quantity to thereby learn a Q value or a value of the Q function.

The reinforcement learning in the present embodiment will be described. The control unit 11 of the server 1 acquires a state $s_t$. The control unit 11 inputs the acquired state st to a learning model 153. The control unit 11 selects an action $a_t$ with the highest evaluation (e.g., the highest value of the Q function) from the possible actions taken in the state $s_t$ based on the output from the learning model 153. The control unit 11 generates a restriction detail based on the selected action $a_t$ and stores it in the restriction DB 147. Under the restriction stored in the restriction DB 147, a withdrawal of tokens by the user is performed.

After a lapse of a predetermined time period, the control unit 11 acquires a state $s_{t+1}$ and calculates a reward. The time period (interval) between the time t when the state $s_t$ is acquired and the time t+1 when the state $s_{t+1}$ is acquired can appropriately be set to 12 hours, 24 hours, 36 hours or 48 hours, for example, though not limited thereto.

When the server 1 performs a withdrawal restriction based on the action $a_t$, the market price and the total user holding quantity fluctuate. The control unit 11 calculates a reward $r_{t+1}$ based on the market price and the total user holding quantity varied based on the action at. A reward of a higher value (positive value) is calculated if the withdrawal restriction yields a desirable result. No reward is granted when the reward is zero, and a penalty is imposed when the reward takes a negative value. The table depicted in FIG. 21 is an example of rewards. A reward is evaluated regarding the rise of the market price and increase of the total user holding quantity during a time period between the state st (time t) and the state $s_{t+1}$ (time t + 1) as a desirable result.

The control unit 11 updates, for example, the value of the Q function or the Q value based on the acquired state $s_{t+1}$ and the reward $r_{t+1}$. More specifically, the control unit 11 updates the value of the Q function or the Q value in a direction in which the reward for an action is maximized. Thus, the action expected to have the maximum value in a certain state can be learned. By repetitively updating the learning model 153 through repetition of the above-described processing, it is possible to learn the learning model 153 that maximizes the reward.

In the learning model 153, the number of nodes in the output layer is assumed as the number of options for the action. Each of the nodes is assigned the detail of the withdrawal restriction.

In the case where the learning model 153 is composed of a neural network, machine learning (deep reinforcement learning) can be performed below. That is, if the state st is input to the input neuron of a neural network model unit, the output neuron outputs Q (st, at). Q is here a function that stores the evaluation of the action a in the state s. The update of the Q function can be performed according to Formula (1).

Formula 1

$$Q(s_t, a_t) \leftarrow Q(s_t, a_t) + \alpha \left\{ r_{t+1} + \gamma \cdot \max Q\ (s_{t+1}, a_{t+1}) - Q\ (s_t, a_t) \right\} \quad \cdots (1)$$

$$Q(s_t, a_t) \leftarrow Q(s_t, a_t) + \alpha \left\{ r_{t+1} - Q\ (s_t, a_t) \right\} \quad \cdots (2)$$

$$Q(s_t, a_t) \leftarrow Q(s_t, a_t) + \alpha \left\{ \gamma \cdot \max Q\ (s_{t+1}, a_{t+1}) - Q\ (s_t, a_t) \right\} \quad \cdots (3)$$

In Formula (1), st indicates a state at a time point t, at indicates an action taken in the state $s_t$, $\alpha$ indicates a learning rate (where $0 < \alpha < 1$) and $\gamma$ indicates a discount factor (where $0 < \gamma < 1$). The learning rate $\alpha$, which is also called a learning coefficient, is a parameter that determines the learning speed (step size). In other words, the learning rate $\alpha$ is a parameter that adjusts how much the Q value or the value of the Q function is to be updated. The discount rate $\gamma$ is a parameter that determines how much evaluations of the future states (rewards or penalties) are to be discounted when the Q function is updated. In other words, the discount rate $\gamma$ is a parameter that determines how much reward or penalty is to be discounted in the case where the evaluation in a certain state is linked to the evaluation in the past state.

In Formula (1), $r_{t+1}$ is the reward obtained as a result of the action. It takes 0 in the case of no reward while it takes a negative value in the case of a penalty. In Q learning, the parameters of the learning model 153 are trained such that the second term of Formula (1), $\{r_{t+1} + \gamma \cdot \max Q\ (s_{t+1}, a_{t+1}) - Q\ (st, at)\}$, is 0, that is, Q (st, at) of the Q function is the sum of the reward ($r_{t+1}$) and the highest value ($\gamma \cdot \max Q\ (s_{t+1}, a_{t+1})$) out of the possible actions in the next state $s_{t+1}$. The parameters of the learning model 153 are updated such that the error between the expected value of the reward and the evaluation of the current action approaches 0. In other words, the value of ($\gamma \cdot \max Q\ (s_{t+1}, a_{t+1})$) is modified based on the current Q value ($s_t$, $a_t$) and the highest evaluation value obtained among the possible actions in the state $s_{t+1}$ after the action at is taken.

A reward is not necessarily granted when an action is taken in a certain state. For example, a reward may be granted after an action is repeated several times. Formula (2) is an updated formula of the Q function when a reward is obtained with the divergence problem avoided in Formula (1). Formula (3) is an updated formula of the Q function when no reward is granted in Formula (1).

In the present embodiment, with the learning model generated by the reinforcement learning, a withdrawal restriction can be imposed in such a manner that the market price and the total user holding quantity move in a desirable direction.

The above-mentioned embodiments described an overall restriction that may be targeted at all the users who hold crypto assets and an individual restriction that is imposed on each of the users who intends to withdraw crypto assets. Embodiments 1, 3 and 4 are modes mainly related to the overall restriction, while Embodiment 2 is a mode mainly related to the individual restriction. The overall restriction and the individual restriction may concurrently be implemented. A mode can be achieved that concurrently implements the overall restriction and the individual restriction with the contents of the above-mentioned embodiments appropriately combined.

As described above, by performing the withdrawal restriction of crypto assets in the tokenback system 100, the asset value of crypto assets can be prevented from collapsing. In particular, in the case where the restriction detail is specified using a learning model, improvement in the accuracy of the withdrawal restriction is expected, enabling a stable operation of crypto assets.

(Pool Function)

A pool function will be described. The pool function is a function that limits the total quantity of withdrawals to equal to or less than a predetermined threshold for all the users every predetermined period. Described is an example where the total quantity of withdrawals is calculated in a cycle of five minutes assuming that the predetermined period is 12 hours and the threshold is 5000.

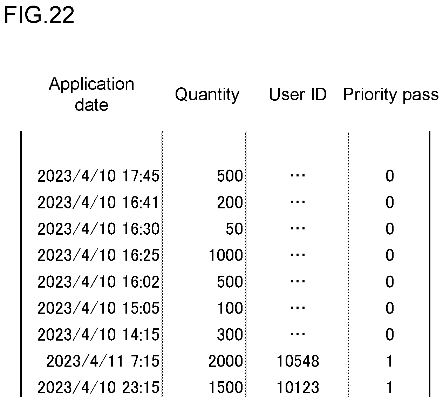

FIG. 22 is an explanatory view depicting an example of a withdrawal queue. The withdrawal queue is for managing withdrawal applications from users. In the withdrawal queue depicted in FIG. 22, data is added to the top and data is fetched from the bottom. The queue has an application date, a quantity, a user ID and a priority pass as attributes. The application date is the date and time when a user applied for a withdrawal. The quantity is the quantity of tokens for which the withdrawal is applied. The user ID is the ID of the user who applies for the withdrawal. The priority pass indicates whether or not preferential treatment for the order of the queue is received. The priority pass of 1 indicates that the user has purchased a priority pass and receives preferential treatment. The priority pass of 0 indicates that the user does not have preferential treatment. For data in FIG. 22, though the older application date the application has, the lower the application is located, the user ID of 10548 is located lower than the users with the priority pass of 0 because it corresponds to the priority pass of 1. However, since the user ID of 10123 corresponds to the priority pass of 1 and has an earlier application date, the user ID of 10548 is located immediately above the user ID of 10123. Note that the priority pass may have multiple types. Examples include a normal pass, a silver pass and a gold pass. The commission for use is set higher for the silver pass than for the normal pass, and higher for the gold pass than for the silver pass. As to application for withdrawal, the silver pass has priority over the normal pass, and the gold pass has priority over the silver pass.

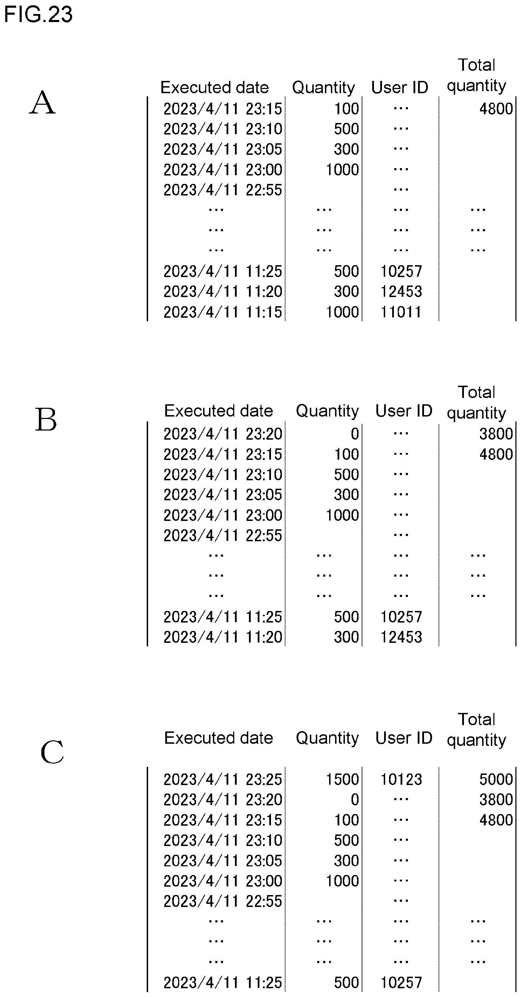

FIG. 23 is an explanatory view depicting an example of a management queue. The management queue is a queue that manages withdrawals for a certain period of time. The withdrawals for the last 12 hours are managed here. FIG. 23A depicts the state of the management queue after processing at 23:15 on April 11, 2023 is executed. FIG. 23B depicts the state of the management queue after processing at 23:20 on the same date is executed, which is five minutes later from the previous processing. FIG. 23C depicts the state of the management queue after processing at 23:25 on the same date is executed, which is five minutes later from the previous processing. Here, the withdrawal application to be processed next is the application with the user ID of 10123 depicted in FIG. 22. At 23:20, the quantity of 1000 corresponding to the user ID of 11011 is excluded from the target for calculation of the total quantity, and thus the total quantity is 3800. However, the withdrawal quantity of the user ID of 10123 is 1500, resulting in the total quantity of 3800 + 1500 = 5300, which does not satisfy the limit quantity of 5000 or less. The withdrawal is thus not executed. Accordingly, the withdrawal at 23:20 is 0, resulting in the total quantity of 3800, i.e., the state in FIG. 23B. At 23:25, the quantity of 300 corresponding to the user ID of 12453 is excluded from the target for calculation of the total quantity, resulting in the total quantity of 3500. Even if the withdrawal quantity of 1500 corresponding to the user ID of 10123 is added, the total quantity is 3500 + 1500 = 5000, which is the upper limit of the limit quantity, so that the withdrawal is executed, resulting in the state in FIG. 23C.

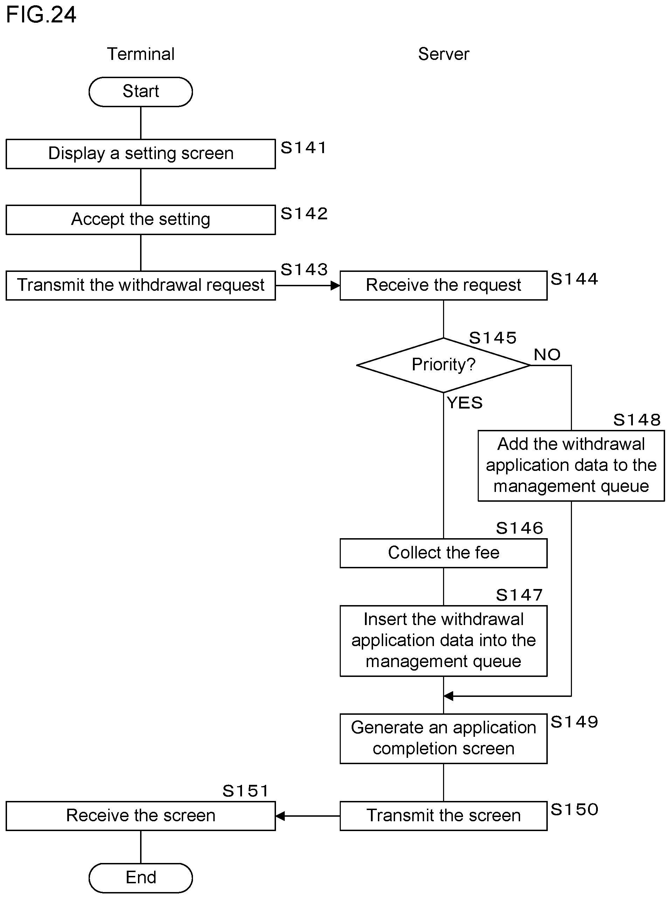

FIG. 24 is a flowchart depicting an example of the procedure for withdrawal application processing. The withdrawal processing is an application processing for storing off-chain tokens held by the user as on-chain tokens in the wallet in the state where the pool function is active. The user operates the terminal 2 and selects the token withdrawal function. The control unit 21 of the terminal 2 displays a setting screen (step S141). The user sets the withdrawal quantity, the wallet to which withdrawal is performed, and the necessity of purchasing the priority pass. The control unit 21 accepts the settings (step S142). The control unit 21 transmits the withdrawal request to the server 1 (step S143). The control unit 11 of the server 1 receives the request (step S144). The control unit 11 determines whether or not the withdrawal is given priority (step S145). If determining that the withdrawal is given priority (YES at step S145), the control unit 11 collects the fee for the priority pass (step S146). Off-chain tokens of the user may be collected, or on-chain tokens may be collected from the wallet of the user. The fee may be collected in legal currency by means of a mechanism, a so-called "in-app purchase" or the like in a method other than collection in tokens. The control unit 11 inserts the withdrawal application data into the management queue so that the data is at the last of the priority group (step S147). If determining that the withdrawal is not given priority (NO at step S145), the control unit 11 adds the withdrawal application data to the last of the management queue (step S148). The control unit 11 generates an application completion screen (step S149). The application completion screen may contain an expected date when the withdrawal is to be executed that is estimated from the state of the management queue. The control unit 11 transmits the application completion screen to the terminal 2 (step S150). The control unit 21 of the terminal 2 receives the application completion screen, displays the application completion screen on the display unit 24 (step S151) and ends the processing.

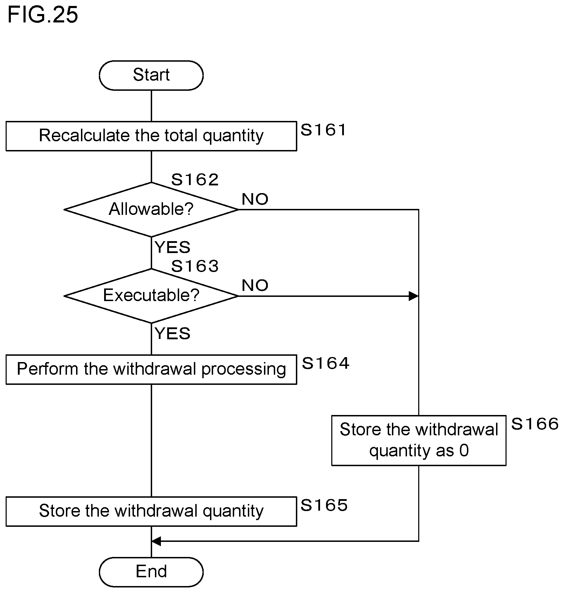

FIG. 25 is a flowchart depicting another example of the procedure for the withdrawal processing. The control unit 11 of the server 1 updates the management queue and recalculates the total quantity (step S161). The control unit 11 determines whether or not the withdrawal is allowable (step S162). As described above, the control unit 11 determines whether or not the sum total value of the recalculated quantity plus the quantity of the withdrawal to be executed exceeds the limit quantity. If the total sum value exceeds the limit quantity, the control unit 11 determines the withdrawal as unallowable. If the total sum value falls within the limit quantity, the control unit 11 determines the withdrawal as allowable. If determining the withdrawal as allowable (YES at step S162), the control unit 11 determines whether or not withdrawal processing is executable (step S163). Referring to the restriction DB 147, the control unit 11 determines whether or not a restriction is being enforced and whether or not the withdrawal by the target user applies to the restriction. If the restriction is not being enforced or if the restriction is being enforced but the withdrawal by the target user does not apply to the restriction, the control unit 11 determines that the withdrawal is executable. If the restriction is being enforced and the withdrawal by the user applies to the restriction, the control unit 11 determines that the withdrawal is not executable. If determining that the withdrawal is executable (YES at step S163), the control unit 11 performs the withdrawal processing (step S164). The control unit 11 stores the withdrawal quantity in the management queue (step S165) and ends the processing. If determining that the withdrawal is unallowable (NO at step S162) or not executable (NO at step S163), the control unit 11 stores the withdrawal quantity as 0 in the management queue without executing the withdrawal processing (step S166) and ends the processing.

The pool function can improve and stabilize the demand-supply balance of tokens and ensure the value of holding the tokens for a long time.

The technical features (constituent features) in the embodiments can be combined with each other, and the combination can form a new technical feature.

It should be considered that the embodiments disclosed here are illustrative in all aspects and are not limitative.

The scope of the present invention is indicated not by the meaning described above but by the claims, and all changes that fall within the meaning equivalent to the claims and the scope are to be embraced.

Reference Signs List

100 tokenback system.
1 server (information processing apparatus)
11 control unit
12 main storage
13 communication unit
14 auxiliary storage
141 userDB
142 member shop DB
143 purchase history DB
144 grant history DB
145 withdrawal history DB
146 restriction rule DB
147 restriction DB
151 learning model
152 learning model
153 learning model
P1 program
2 terminal
21 control unit
22 main storage
23 communication unit
24 display unit
25 input unit
26 image taking unit
27 auxiliary storage
P2 program
3 exchange server
4 EC server
5 issuing server
B bus
N network

**Claims**

1. An information processing method executed by a computer, comprising:

   acquiring demand-supply information related to demand or supply for crypto assets on a block chain system; and
   restricting, based on acquired demand-supply information, a transfer quantity of tokens that can be converted into the crypto assets held by a user.

2. The information processing method according to Claim 1, wherein details of the restriction are defined in correspondence with a holding quantity of the crypto assets by the user.

3. The information processing method according to claim 1, wherein details of the restriction are defined in correspondence with a holding quantity by an operator.

4. The information processing method according to claim 2 or 3, wherein the transfer quantity is restricted for all users.

5. The information processing method according to any one of claims 1 to 3, further comprising:

acquiring a transfer history of the tokens of the user; and
defining an individual restriction on the user based on acquired transfer history.

6. The information processing method according to any one of claims 1 to 3, further comprising making a report to the user before the restriction is performed.

7. The information processing method according to any one of claims 1 to 3, further comprising reporting removal of the restriction to the user.

8. The information processing method according to claim 1, comprising:

acquiring demand-supply information including a holding quantity of the crypto assets held by the user and a holding quantity of the crypto assets held by an operator; and
inputting acquired demand-supply information to a learning model and acquiring a restriction on a transfer quantity, the learning model having been trained to output a restriction on a transfer quantity when receiving input of demand-supply information including a holding quantity of a user and holding quantity of an operator.

9. The information processing method according to claim 1, comprising:
inputting acquired demand-supply information to a learning model and acquiring a restriction on a transfer quantity, the learning model having been reinforced-trained based on state information including a holding quantity of the crypto assets held by the user and a holding quantity of the crypto assets held by an operator, action information including a restriction on a withdrawal of the crypto assets and reward information including a variation of a total quantity of the crypto assets and a variation of a market price of the crypto assets.

10. The information processing method according to any one of claims 1 to 3, further comprising:

acquiring an acquisition history of the crypto assets of the user; and
easing a restriction on the user based on acquired acquisition history.

11. The information processing method according to any one of claims 1 to 3, further comprising:

acquiring a rank defined by an acquisition history or a holding period of the crypto assets for the user; and
easing a restriction on the user based on an acquired rank.

12. The information processing method according to any one of claims 1 to 3 further comprising removing the restriction after a lapse of a predetermined time period from a start of the restriction.

13. The information processing method according to claim 1, comprising limiting a total quantity of withdrawals every predetermined time period for the crypto assets to a predetermined threshold or lower.

14. An information processing program causing a computer to execute processing of:

acquiring demand-supply information related to demand or supply for crypto assets on a block chain system; and
restricting, based on acquired demand-supply information, a transfer quantity of tokens that can be converted into the crypto assets held by a user.

15. An information processing apparatus, comprising:

an acquisition unit that acquires demand-supply information related to demand or supply for crypto assets on a block chain system; and
a restriction unit that restricts, based on acquired demand-supply information, a transfer quantity of tokens that can be converted into the crypto assets held by a user.

FIG.1

## FIG.2

FIG.3

2

21
Control Unit

27
Auxiliary Storage
P2
Program

22
Main Storage

23
Communication Unit

24
Display Unit

25
Input Unit

26
Image-Taking Unit

2n

2m

## FIG.4

141

| User ID | User name | Holding quantity | Wallet | Rank | Personal Information |
|---------|-----------|------------------|--------|------|----------------------|
| 10001 | Taro Yamada | 0.45 | ⋯ | Silver | ⋯ |
| 10002 | Hanako Tanaka | 1.17 | ⋯ | Gold | ⋯ |
| 10003 | Ichiro Sato | 0.04 | ⋯ | Bronze | ⋯ |
| ⋯ | ⋯ | ⋯ | ⋯ | ⋯ | ⋯ |

FIG.5

142

| Member shop ID | Member shop name | Member shop information | Commission rate |
|---|---|---|---|
| 20001 | A | ... | 10% |
| 20002 | B | ... | 5% |
| 20003 | C | ... | 8% |
| ... | ... | ... | ... |

FIG.6

143

| Purchase ID | Purchaser | Member shop | Date | Purchased commodity | Purchase amount |
|---|---|---|---|---|---|
| 30001 | 10001 | 20001 | 2021/4/1 | a | 40,000 |
| 30002 | 10011 | 20011 | 2021/4/1 | b | 50,000 |
| 30003 | 10111 | 20111 | 2021/4/1 | c | 100,000 |
| … | … | … | … | … | … |

FIG.7

144

| Date | Tokenback | | |
| --- | --- | --- | --- |
| | User | Grant quantity | Purchase ID |
| 2021/4/1 12:00 | 10001 | 0.45 | 30001 |
| 2021/4/1 12:01 | 10011 | 0.27 | 30002 |
| 2021/4/1 12:02 | 10111 | 0.9 | 30003 |
| … | … | … | … |

FIG.8

145

| User ID | Withdrawal quantity | Withdrawal Date | ... |
|---------|--------------------|-----------------|-----|
| 10002 | 0.05 | 2022/3/10 15:43 | ... |
| ... | ... | ... | ... |

FIG.9

EP 4 546 244 A1

146

| Rule ID | Condition | Target | Exclusion | Restriction | Period | ⋯ |
|---|---|---|---|---|---|---|
| 40001 | Circulation quantity in the market is more than 10% of the issue quantity | All users | Diamond | Withdrawal prohibited | 3 days | ⋯ |
| 40002 | Circulation quantity in the market is more than 5% of the issue quantity | All users | None | Less than 5% of holdings / day | 5 days | ⋯ |
| 40003 | Monthly withdrawal quantity of 1.5 or more | Applicable user | None | Withdrawal prohibited | 5 days | ⋯ |
| ⋯ | ⋯ | ⋯ | ⋯ | ⋯ | ⋯ | ⋯ |

FIG.10

147

| Rule ID | Status | Target | Period |
|---|---|---|---|
| 40001 | Suspended | — | — |
| 40002 | Enforced | All User | 2022/03/01～2022/03/05 |
| 40003 | Enforced | 10003 | 2022/02/14～2022/02/08 |
| ... | ... | ... | ... |

## FIG.11

FIG.12

Terminal

Server

Start

S41
Transmit a request

S42
Receive the request

S43
Acquire the quantity

S44
Restrict?

NO

YES

S45
Acquire the details

S46
Generate a message

S47
Generate a screen

S49
Receive the screen

S48
Transmit the screen

S50
Display the screen

End

FIG.13

Terminal                                    Server

Start

S61
Display the setting screen

S62
Accept the settings

S63                                         S64
Transmit a withdrawal request  →  Receive the request

S65
NO ← Subject to restrictions?

YES

S66
Can the requested
withdrawal quantity be          NO
withdrawn?

YES    S67                    S69
Execute the withdrawal    Generate an
                          error screen

S68
Generate a withdrawal
completion screen

S71                           S70
Receive the screen  ←  Transmit the screen

S72
Error?    NO

YES

S73
NO  Cancel?

YES

End

# FIG.14

Dashboard

Your Coin 100 d02

Withdrawals are currently restricted.

Restriction Period :
2022.3.1 - 2022.3.21

Close

3/8 3/9 3/10 3/11 3/12 3/13 3/14

FIG.15

```
                    ┌─────────────┐
                    │    Start    │
                    └─────────────┘
                           │
     ┌─────────────────────┤
     │          ┌──────────▼──────────┐ S81
     │          │ Acquire information │
     │          └──────────┬──────────┘
     │                     │
     │                   S82
     │              ╱────────────╲        YES
     │            ╱  The period has  ╲──────────┐
     │            ╲    expired?      ╱          │
     │              ╲────────────╱              │
     │                  │ NO                    │
     │          ┌──────────▼──────────┐ S83     │
     │          │  Acquire the details│         │
     │          └──────────┬──────────┘         │
     │                     │                    │
     │                   S84                     │
     │              ╱────────────╲   YES         │
     │            ╱ Is the condition ╲──────────▶│
     │            ╲    satisfied?    ╱           │
     │              ╲────────────╱               │
     │                  │ NO                     │
     │                  │     ┌──────────────┐ S85
     │                  │     │Specify the user│
     │                  │     └──────┬───────┘
     │                  │            │
     │                  │◀───────────┘
     │                S86
     │  YES      ╱────────────╲
     └──────────╱  Unprocessed   ╲
                ╲  restriction?   ╱
                  ╲────────────╱
                      │ NO
              ┌──────────▼──────────┐ S87
              │ Make a report setting│
              └──────────┬──────────┘
                         │
                ┌────────▼────────┐
                │      End        │
                └─────────────────┘
```

FIG.16

151

Market circulation quantity ──→ | Learning Model | ──→ No restriction ──→ 0.85

Market price ──→ | | ──→ 10 units/month ──→ 0.10

Quantity of tokens held by the user ──→ | | ──→ 50 units/month ──→ 0.04

Quantity of tokens held by the operator ──→ | | ──→ Unwithdrawable for the current month ──→ 0.01

## FIG.17

Start

Acquire training data    S101

Performs learning    S102

S103
YES Unprocessed training data?
NO

Store the learning model    S104

End

# FIG.18

Terminal | Server

```
                    ( Start )
                        │
                   ┌────┴─────┐  S111
                   │ Display a setting screen │
                   └────┬─────┘
                        │  S112
                   ┌────┴─────┐
                   │ Accept settings │
                   └────┬─────┘
                        │  S113                    S114
        ┌───────────────┴───────────────┐   ┌──────────────────┐
        │ Transmit a withdrawal request │──▶│ Receive the request │
        └───────────────────────────────┘   └─────────┬────────┘
                                                       │  S115
                                              ┌────────┴────────┐
                                              │   Determinate   │
                                              └────────┬────────┘
                                                       │  S116
                                              ◇ Is the withdrawal ◇── NO
                                                allowable?
                                                  │ YES
```

S117 — Execute a withdrawal

S119 — Generate an error screen

S118 — Generate a withdrawal completion screen

S121 — Receive the screen

S120 — Transmit the screen

S122 — Error? — NO

YES

S123 — Cancel? — NO

YES

( End )

FIG.19

Learning Model 152

Market circulation quantity → 
Market price → 
Quantity of tokens held by the user → 
Quantity of tokens held by the operator → 

No restriction → 0.85
10 units/month → 0.10
50 units/month → 0.04
Diamond only → 0.01

EP 4 546 244 A1

FIG.20

```
                  ┌──────────┐
                  │  Start   │
                  └────┬─────┘
                       │
          ┌────────────────────┐
          │  Acquire input data │ S131
          └────────────────────┘
                       │
          ┌────────────────────┐
          │  Acquire an output  │ S132
          └────────────────────┘
                       │
          ┌────────────────────┐
          │  Store the details  │ S133
          └────────────────────┘
                       │
                  ┌──────────┐
                  │   End    │
                  └──────────┘
```

## FIG.21

State s_t

Action a_t

153

Market circulation quantity →

Market price →

Quantity of tokens held by the user →

Quantity of tokens held by the operator →

Learning Model

→ No restriction

→ 10 units/month

→ 50 units/month

→ Diamond only

Reward r_{t+1}

|  |  | Market price Fall | Market price Maintain | Market price Rise |
|---|---|---|---|---|
| Total user holding quantity | Decrease | -2 | -1 | 0 |
| Total user holding quantity | No change | -1 | 0 | 1 |
| Total user holding quantity | Increase | 0 | 1 | 2 |

FIG.22

| Application date | Quantity | User ID | Priority pass |
|---|---|---|---|
| 2023/4/10 17:45 | 500 | ⋯ | 0 |
| 2023/4/10 16:41 | 200 | ⋯ | 0 |
| 2023/4/10 16:30 | 50 | ⋯ | 0 |
| 2023/4/10 16:25 | 1000 | ⋯ | 0 |
| 2023/4/10 16:02 | 500 | ⋯ | 0 |
| 2023/4/10 15:05 | 100 | ⋯ | 0 |
| 2023/4/10 14:15 | 300 | ⋯ | 0 |
| 2023/4/11 7:15 | 2000 | 10548 | 1 |
| 2023/4/10 23:15 | 1500 | 10123 | 1 |

## FIG.23

A

| Executed date | Quantity | User ID | Total quantity |
|---|---|---|---|
| 2023/4/11 23:15 | 100 | ⋯ | 4800 |
| 2023/4/11 23:10 | 500 | ⋯ | |
| 2023/4/11 23:05 | 300 | ⋯ | |
| 2023/4/11 23:00 | 1000 | ⋯ | |
| 2023/4/11 22:55 | | ⋯ | |
| ⋯ | ⋯ | ⋯ | ⋯ |
| ⋯ | ⋯ | ⋯ | ⋯ |
| ⋯ | ⋯ | ⋯ | ⋯ |
| 2023/4/11 11:25 | 500 | 10257 | |
| 2023/4/11 11:20 | 300 | 12453 | |
| 2023/4/11 11:15 | 1000 | 11011 | |

B

| Executed date | Quantity | User ID | Total quantity |
|---|---|---|---|
| 2023/4/11 23:20 | 0 | ⋯ | 3800 |
| 2023/4/11 23:15 | 100 | ⋯ | 4800 |
| 2023/4/11 23:10 | 500 | ⋯ | |
| 2023/4/11 23:05 | 300 | ⋯ | |
| 2023/4/11 23:00 | 1000 | ⋯ | |
| 2023/4/11 22:55 | | ⋯ | |
| ⋯ | ⋯ | ⋯ | ⋯ |
| ⋯ | ⋯ | ⋯ | ⋯ |
| ⋯ | ⋯ | ⋯ | ⋯ |
| 2023/4/11 11:25 | 500 | 10257 | |
| 2023/4/11 11:20 | 300 | 12453 | |

C

| Executed date | Quantity | User ID | Total quantity |
|---|---|---|---|
| 2023/4/11 23:25 | 1500 | 10123 | 5000 |
| 2023/4/11 23:20 | 0 | ⋯ | 3800 |
| 2023/4/11 23:15 | 100 | ⋯ | 4800 |
| 2023/4/11 23:10 | 500 | ⋯ | |
| 2023/4/11 23:05 | 300 | ⋯ | |
| 2023/4/11 23:00 | 1000 | ⋯ | |
| 2023/4/11 22:55 | | ⋯ | |
| ⋯ | ⋯ | ⋯ | ⋯ |
| ⋯ | ⋯ | ⋯ | ⋯ |
| ⋯ | ⋯ | ⋯ | ⋯ |
| 2023/4/11 11:25 | 500 | 10257 | |

## FIG.24

Terminal                                  Server

```
        ( Start )

┌─────────────────────────┐  S141
│ Display a setting screen │
└─────────────────────────┘

┌─────────────────────────┐  S142
│    Accept the setting    │
└─────────────────────────┘

                          S143
┌─────────────────────────┐      ┌─────────────────────┐  S144
│Transmit the withdrawal  │─────▶│  Receive the request│
│        request          │      └─────────────────────┘
└─────────────────────────┘
```

S145

Priority?  →  NO

YES

S148

Add the withdrawal application data to the management queue

S146

Collect the fee

S147

Insert the withdrawal application data into the management queue

Generate an application completion screen  S149

S151

Receive the screen  ◀──  Transmit the screen  S150

( End )

FIG.25

```
                    ┌──────────┐
                    │  Start   │
                    └────┬─────┘
                         │
          ┌──────────────────────────────┐  S161
          │  Recalculate the total quantity │
          └──────────────┬───────────────┘
                         │  S162
                    ◇ Allowable? ◇ ──── NO ─────────────┐
                         │                               │
                        YES                              │
                         │  S163                         │
                    ◇ Executable? ◇ ──── NO ──────────────┤
                         │                               │
                        YES                              │
          ┌──────────────────────────────┐  S164         │
          │ Perform the withdrawal processing │           │
          └──────────────┬───────────────┘               │
                         │                    ┌───────────────────────┐  S166
                         │                    │  Store the withdrawal  │
                         │                    │    quantity as 0       │
                         │                    └───────────┬───────────┘
          ┌──────────────────────────────┐  S165         │
          │  Store the withdrawal quantity │              │
          └──────────────┬───────────────┘               │
                         │◄──────────────────────────────┘
                    ┌─────┴────┐
                    │   End    │
                    └──────────┘
```

## INTERNATIONAL SEARCH REPORT

| International application No. |
| --- |
| **PCT/JP2023/020926** |

| A. | CLASSIFICATION OF SUBJECT MATTER |
| --- | --- |

*G06Q 40/02*(2023.01)i
FI:  G06Q40/02

According to International Patent Classification (IPC) or to both national classification and IPC

| B. | FIELDS SEARCHED |
| --- | --- |

Minimum documentation searched (classification system followed by classification symbols)

G06Q40/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2019-128932 A (SOCIAL GOOD FOUND INC.) 01 August 2019 (2019-08-01) paragraphs [0040], [0060] | 1-15 |
| A | Pick up Topics (1) GINKAN. CardWave. 25 October 2019, vol. 32, no. 5, pp. 40-43 entire text, all drawings | 1-15 |
| A | 鈴木淳一. ブロックチェーン3.0 国内外特許からユースケースまで. 第1版, NTS Inc., 15 December 2020, pp. 67-70, ISBN: 978-4-86043-682-7, non-official translation (SUZUKI, Junichi. Blockchain 3.0: From Domestic and International Patents to Use Cases. First Edition.) "2. Challenges for Token Economy Realization" | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 July 2023** | **11 July 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/020926**

| Patent document cited in search report | Publication date (day/month/year) | Patent family member(s) | Publication date (day/month/year) |
|---|---|---|---|
| JP 2019-128932 A | 01 August 2019 | WO 2019/146301 A1 | |

Form PCT/ISA/210 (patent family annex) (January 2015)

**EP 4 546 244 A1**

## REFERENCES CITED IN THE DESCRIPTION

**Patent documents cited in the description**

- JP 2017054339 A